(19) Europäisches Patentamt / European Patent Office / Office européen des brevets

(11) **EP 4 246 256 A1**

(12) **EUROPÄISCHE PATENTANMELDUNG**

(43) Veröffentlichungstag:
**20.09.2023 Patentblatt 2023/38**

(51) Internationale Patentklassifikation (IPC):
**G05B 19/416** $^{(2006.01)}$ **B23Q 15/013** $^{(2006.01)}$

(21) Anmeldenummer: **22161886.1**

(52) Gemeinsame Patentklassifikation (CPC):
**G05B 19/4163; B23Q 15/013;** G05B 2219/49077

(22) Anmeldetag: **14.03.2022**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Rahn, Klaus**
**91623 Sachsen bei Ansbach (DE)**

(74) Vertreter: **Siemens Patent Attorneys**
**Postfach 22 16 34**
**80506 München (DE)**

(54) **WERKSTÜCKBEARBEITUNG MIT OPTIMIERTER SPINDELDREHZAHL IN ABHÄNGIGKEIT EINES SCHNITTPUNKTES**

(57) Die Erfindung betrifft ein Verfahren zum Bestimmen einer Spindeldrehzahl für eine spanabhebende Bearbeitung eines Werkstücks (16) mittels eines Werkzeugs (13), wobei während der Bearbeitung des Werkstücks (16) das Werkzeug (13) mit einer um eine Werkzeugspindelachse rotierenden Werkzeugspindel (11) einer Bearbeitungsmaschine verbunden ist und mit der Spindeldrehzahl um eine Werkzeugachse (A) rotiert, wobei das Werkzeug (13) zur spanabhebenden Bearbeitung des Werkstücks (16) wenigstens eine Schneide (S) aufweist, wobei sich wenigstens in einem Bereich der Schneide (S) im Verlauf der Schneide (S) der Abstand zwischen der Schneide (S) und der Werkzeugachse (A) stetig ändert, wobei sich das Werkzeug (13) während der Bearbeitung des Werkstücks (16) relativ zu dem Werkstück (16) entlang einer vorgegebenen Bahn (WB) bewegt, wobei sich ein äußerer Schnittpunkt (SO) der in Eingriff mit dem Werkstück (16) befindlichen Schneide (S) dadurch auszeichnet, dass er von allen in Kontakt mit dem Werkstück (16) befindlichen Punkten des Bereichs der Schneide (S) den größten Abstand zu der Werkzeugachse (A) aufweist und wobei sich entlang der Bahn (WB) eine Position des äußeren Schnittpunkts (SO) entlang der Schneide (S) ändert.

Zum Erreichen einer optimalen Vorschubgeschwindigkeit wird dabei die Spindeldrehzahl dynamisch entlang der Bahn so ermittelt und eingestellt, dass sich für den äußeren Schnittpunkt (SO) stets die maximal mögliche Schnittgeschwindigkeit ergibt.

FIG 4

EP 4 246 256 A1

**Beschreibung**

Die Erfindung betrifft ein Verfahren zum Bestimmen einer Spindeldrehzahl für eine spanabhebende Bearbeitung eines Werkstücks mittels eines Werkzeugs, wobei während der Bearbeitung des Werkstücks das Werkzeug mit einer um eine Werkzeugspindelachse rotierenden Werkzeugspindel einer Bearbeitungsmaschine verbunden ist und mit der Spindeldrehzahl um eine Werkzeugachse rotiert, wobei das Werkzeug zur spanabhebenden Bearbeitung des Werkstücks wenigstens eine Schneide aufweist, wobei sich wenigstens in einem Bereich der Schneide im Verlauf der Schneide der Abstand zwischen der Schneide und der Werkzeugachse stetig ändert, wobei sich das Werkzeug während der Bearbeitung des Werkstücks relativ zu dem Werkstück entlang einer vorgegebenen Bahn bewegt, wobei sich ein äußerer Schnittpunkt der in Eingriff mit dem Werkstück befindlichen Schneide dadurch auszeichnet, dass er von allen in Kontakt mit dem Werkstück befindlichen Punkten des Bereichs der Schneide den größten Abstand zu der Werkzeugachse aufweist und wobei sich entlang der Bahn eine Position des äußeren Schnittpunkts entlang der Schneide ändert.

Ferner betrifft die Erfindung eine externe Recheneinrichtung, insbesondere ein CAD/CAM-System.

Weiterhin betrifft die Erfindung eine numerische Steuereinrichtung, insbesondere eine CNC-Steuerung.

Darüber hinaus betrifft die Erfindung ein Bearbeitungsmaschinensystem, umfassend eine Bearbeitungsmaschine, insbesondere eine Werkzeugmaschine oder einen Roboter, und eine damit verbundene numerische Steuereinrichtung.

Aus dem Stand der Technik ist eine Schlichtbearbeitung einer Werkstück-Oberfläche mittels eines Kugelfräsers, der in eine Werkzeugspindel einer durch eine CNC-Steuerung gesteuerten Werkzeugmaschine eingespannt ist, bekannt. Dabei erfolgt die Bearbeitung mit einer konstanten, für den verwendeten Fräser vorgesehenen Spindeldrehzahl, der Werkzeug-Solldrehzahl.

Aus der WO 2005005082 A2 sind ein Verfahren und eine Vorrichtung zum Fräsen von Freiformflächen bekannt. Zum 5-Achs-Fräsen wird dabei ein Werkstück durch ein Werkzeug, z.B. einen Fräser, gefräst, um eine gewünschte Freiformfläche zu erzeugen. Dieses Werkzeug wird gegenüber dem Werkstück entlang mindestens einer durch Auflagepunkte definierten Werkzeugbahn bzw. Fräsbahn verschoben. Dabei wird für jeden Stützpunkt der Werkzeugbahn ein Werkzeugvektor in Form von Vorlaufwinkeln und Anstellwinkeln definiert. Aus den Vorlaufwinkeln und Anstellwinkeln und aus einem für jeden Stützpunkt ermittelten Antriebsvektor wird für jeden Stützpunkt ein Normalenvektor der Werkstückoberfläche bestimmt. Der Normalenvektor in jedem Stützpunkt der Werkzeugbahn wird zur 3D-Radiuskorrektur verwendet, um Messabweichungen des Fräsers auszugleichen.

Bei Werkzeugen, bei denen sich der Abstand zwischen der Schneide (Schneidkante) und der Werkzeugachse über den Verlauf der Schneide ändert, z.B. bei Kugel-, Radius- oder Tonnenfräsern, werden für die Werkstück-Bearbeitung bislang immer eine konstante Drehzahl und ein konstanter Vorschub eingestellt, auch für die Bearbeitung von Freiformflächen. Da ein "äußerer Schnittpunkt" zwischen der Werkstückoberfläche und der Schneide jedoch am Fräserradius - abhängig von der Geometrie des Fräsers - wandert, verlangsamt sich die Schnittgeschwindigkeit, wenn der äußere Schnittpunkt am Fräser in Richtung Zentrum wandert. Das ist für den eigentlichen Schneidprozess ungünstig.

Derzeit akzeptiert man bei der Bearbeitung eines Werkstücks mit einem derartigen Werkzeug eine einbrechende Schnittgeschwindigkeit, die sich besonders bei "Mold & Die" - Bearbeitungen durch lange Bearbeitungszeiten bemerkbar macht.

Aufgabe der vorliegenden Erfindung ist es daher, den Schneidprozess bei der Bearbeitung eines Werkstücks mit einem Werkzeug mit den oben genannten Eigenschaften zu optimieren, insbesondere dahingehend, dass sich eine Bearbeitungszeit des Werkstücks verkürzt.

Diese Aufgabe wird gelöst durch ein Verfahren zum Bestimmen einer Spindeldrehzahl für eine spanabhebende Bearbeitung eines Werkstücks mittels eines Werkzeugs mit den in Patentanspruch 1 angegebenen Verfahrensschritten.

Ferner wird die Aufgabe gelöst durch eine externe Recheneinrichtung, insbesondere ein CAD/CAM-System, nach Anspruch 13 zur Durchführung eines Verfahrens nach einem der Ansprüche 1 bis 8.

Weiterhin wird die Aufgabe gelöst durch eine numerische Steuereinrichtung, insbesondere eine CNC-Steuerung, nach Anspruch 14 zur Durchführung eines Verfahrens nach einem der Ansprüche 1 bis 12.

Darüber hinaus wird die Aufgabe gelöst durch ein Bearbeitungsmaschinensystem, umfassend eine Bearbeitungsmaschine, insbesondere eine Werkzeugmaschine oder einen Roboter, und eine damit verbundene numerische Steuereinrichtung nach Anspruch 14 zur Steuerung der Bearbeitungsmaschine.

Die Erfindung sieht vor, dass bei dem eingangs genannten Verfahren die Spindeldrehzahl entlang der Bahn in Abhängigkeit der Position des äußeren Schnittpunkts in dem betreffenden Bereich der Schneide (Schneidkante) bestimmt wird.

Der Erfindung liegt die Erkenntnis zugrunde, dass der Punkt des in Kontakt mit dem Werkstück befindlichen Bereichs der Schneide, der den größten Abstand zur Werkzeugachse aufweist, in dieser Anmeldung als "äußerer Schnittpunkt" bezeichnet, von allen in Kontakt mit dem Werkstück befindlichen Punkten der Schneide die größte Schnittgeschwindigkeit aufweist. Soll eine möglichst kurze Bearbeitungszeit erreicht, aber an keinem Punkt der Schneide eine bestimmte, insbesondere die mit dem betreffenden Werkzeug maximal zulässige, Schnittgeschwindigkeit überschritten werden, so ist die Spindeldrehzahl entlang der Bahn in Abhängigkeit der sich im Verlauf der Bearbeitung verändernden Position dieses äußeren Schnittpunktes zu bestimmen.

Vorteilhaft findet die Erfindung bei der Bearbeitung von Werkstücken mit solchen spanabhebenden Werkzeugen Anwendung, deren Durchmesser sich im Bereich der Schneide bzw. Schneiden zur Werkzeugspitze hin kontinuierlich bzw. stetig verkleinert. Beispiele hierfür sind Kugel-, Radius- oder Tonnenfräser.

Bei derartigen Werkzeugen ergeben sich für unterschiedliche Punkte der in Eingriff in das Werkstück befindlichen Schneide (bzw. Schneiden) entlang der Schneide unterschiedliche Schnittgeschwindigkeiten.

Dabei wird als Schnittgeschwindigkeit die Geschwindigkeit bezeichnet, mit der eine Werkzeugschneide bzw. ein bestimmter Punkt der Werkzeugschneide in Schnittrichtung durch den zu bearbeitenden Werkstoff geführt wird und somit einen Span abnimmt. Sie wird meist in Meter pro Minute (m/min) angegeben.

Weiterhin findet die Erfindung vorteilhaft bei solchen Bearbeitungen Anwendung, bei denen während der Bearbeitung stets nur ein kleiner Teil der Schneide mit dem Werkstück in Eingriff steht. Dies trifft insbesondere auf Schlicht- oder Vorschlicht-Bearbeitungen zu. Bei diesen Fräsbearbeitungen taucht das Werkzeug nur geringfügig in die Werkstückoberfläche ein. In der Regel handelt es sich dabei um Eintrittstiefen weit unterhalb von 1 mm, z.B. im Bereich von 0,1 mm bis 0,3 mm.

Besonders vorteilhaft findet die Erfindung bei der Schlicht- oder Vorschlicht-Bearbeitung so genannter Freiformflächen Anwendung, deren Form sich insbesondere durch zwei- oder dreidimensionale Kurven beschreiben lässt.

Darüber hinaus lässt sich die Erfindung besonders vorteilhaft bei einer 3-Achs-Maschine bzw. 3-Achs-Bearbeitung anwenden, bei der lediglich eine Positionierung des Werkzeugs relativ zu dem Werkstück in x-, y- und z-Richtung möglich ist und insbesondere eine während der Bearbeitung des Werkstücks konstante Orientierung des Werkzeugs gegenüber dem Werkstück vorgesehen ist. Eine sich während der Bearbeitung des Werkstücks ändernde Orientierung des Werkzeugs relativ zu der Werkstück-Oberfläche kann dabei nicht durch eine Umorientierung des Werkzeugs ausgeglichen werden.

In der Regel geben die Werkzeughersteller für ihre Werkzeuge bestimmte Soll- oder Maximal-Schnittgeschwindigkeiten vor. Die größte Schnittgeschwindigkeit wird dabei bei einer bestimmten Rotationsgeschwindigkeit des Werkzeugs (Spindeldrehzahl) an dem Punkt des in Kontakt mit dem Werkstück befindlichen Teils der Schneide erreicht, der den größten Abstand von der Werkzeugachse aufweist. Für Schnittpunkte zwischen Werkstück und Schneide, die einen kleineren Abstand zur Werkzeugachse aufweisen, ist daher - im Vergleich zu Schnittpunkten mit einem größeren Abstand - eine höhere Spindeldrehzahl notwendig, um eine bestimmte, insbesondere die maximal zulässige Schrittgeschwindigkeit zu erreichen.

Eine Ausführungsform der Erfindung sieht vor, dass der äußere Schnittpunkt der Schneide automatisch für den Verlauf der Bearbeitung, also entlang der Bahn, bestimmt wird und die Spindeldrehzahl der Werkzeugspindel automatisch an den äußeren Schnittpunkt angepasst wird, insbesondere derart, dass sich - zumindest für einen bestimmten Bereich, der durch das Werkzeug bearbeitet wird - für den äußeren Schnittpunkt im Verlauf der Bearbeitung eine wenigstens im Wesentlichen konstante Schnittgeschwindigkeit ergibt.

Der äußere Schnittpunkt der Schneide kann z.B. mittels eines optischen Verfahrens, z.B. durch Beobachtung der Werkstück-Bearbeitung mittels einer Kamera, ermittelt werden.

Der Zusammenhang zwischen dem äußeren Schnittpunkt und der Spindeldrehzahl kann beispielsweise in einer Tabelle hinterlegt sein, so dass die numerische Steuereinrichtung bei Kenntnis des äußeren Schnittpunktes eine dadurch zugeordnete Spindeldrehzahl ermitteln und einstellen kann.

Eine Ausführungsform der Erfindung sieht vor, dass ein äußerer Schnittpunkt-Abstand als Abstand zwischen dem äußeren Schnittpunkt und der Werkzeugachse bestimmt wird und die Spindeldrehzahl in Abhängigkeit des äußeren Schnittpunkt-Abstands bestimmt wird.

Diese Ausführungsform hat den Vorteil, dass der äußere Schnittpunkt-Abstand allein aus den in der numerischen Steuereinrichtung vorliegenden Daten (Werkstück-Geometriedaten, Werkzeug-Geometriedaten, Bahndaten) ermittelt werden kann und somit keine zusätzlichen Hilfsmittel, wie z.B. eine Kamera, erforderlich sind.

Eine Ausführungsform der Erfindung sieht vor, dass eine Werkstückoberfläche des Werkstücks bezüglich der Werkzeugachse um einen Neigungswinkel geneigt ist, wobei der Neigungswinkel, den eine Oberflächennormale des Werkstücks mit der Werkzeugachse einschließt, entlang der Bahn ermittelt wird und der äußere Schnittpunkt-Abstand in Abhängigkeit des Neigungswinkels bestimmt wird.

Gewöhnlich bewegt sich die Neigung in einem Bereich von 0° bis maximal 90°. Bei den meisten üblichen Werkzeugen ergeben sich bei einem Wert von 90° oder nahe 90° die größten Schnittgeschwindigkeiten der Werkzeugschneide bzw. Werkzeugschneiden. Um eine vorgegebene maximale Schnittgeschwindigkeit nicht zu überschreiten, wird demnach für diese Neigungswinkel die maximale Spindeldrehzahl ermittelt und vorgegeben.

Der Erfindung liegt die Erkenntnis zugrunde, dass häufig für andere Neigungswinkel, insbesondere bei kleinen Winkeln, wesentlich kleinere Schnittgeschwindigkeiten erreicht werden. Die Spindeldrehzahl kann daher für solche Werkzeuge und Neigungswinkel erhöht werden, ohne dabei eine bestimmte (häufig vom Werkzeughersteller vorgegebene, maximale) Schnittgeschwindigkeit zu übersteigen.

Damit kann stets eine für die betreffende Neigung optimierte Spindeldrehzahl ermittelt und eingestellt werden, die insbesondere eine optimierte Bearbeitungszeit ermöglicht.

Ist im Verlauf der Bearbeitung die Orientierung der Werkstückoberfläche (Oberflächennormale) des Werkstücks in einem Schnittbereich des Werkstücks, also in einem Bereich des Werkstücks, in dem gerade ein Span abgehoben wird, gegenüber der Werkzeugachse unterschiedlich geneigt, so verschiebt sich (bei konstanter Eintrittstiefe des Werkzeugs in das Werkstück) der äußere Schnittpunkt der Werkzeugschneide, also der Punkt der Schneide, der sich in Kontakt mit dem Werkstück befindet und der von allen in Kontakt mit dem Werkstück befindlichen Punkten der Schneide den größten Abstand zu der Werkzeugachse aufweist, bzw. der Punkt der Schneide, der sich in Kontakt mit dem Werkstück befindet und der von allen in Kontakt mit dem Werkstück befindlichen Punkten die größte Schnittgeschwindigkeit aufweist, entlang der Schneide. Bei den genannten Werkzeugen ergeben sich daher im Verlauf der Bearbeitung (entlang der Bahn) unterschiedliche Abstände zwischen dem äußeren Schnittpunkt und der Werkzeugachse. Dies hat bei einer konstanten Rotationsgeschwindigkeit des Werkzeugs unterschiedliche Schnittgeschwindigkeiten zur Folge.

Diese Ausführungsform bietet den Vorteil, dass bei der Bearbeitung eines Werkstücks ohnehin häufig die Oberflächennormale für die jeweilige Werkzeug-Position mittels der numerischen Steuereinrichtung bestimmt werden muss, beispielsweise im Zuge einer bekannten Werkzeugradiuskorrektur, und sich der Rechenaufwand daher nicht wesentlich erhöht.

Eine Ausführungsform der Erfindung sieht vor, dass der äußere Schnittpunkt und/oder der äußere Schnittpunkt-Abstand in Abhängigkeit von vorgegebenen oder vorbekannten Werkzeuggeometriedaten, Werkstückdaten (Oberflächendaten, Einspannung etc.) und einer Eingriffstiefe des Werkzeugs in das Werkstück bestimmt werden.

In der Regel liegen die Geometriedaten des Werkstücks sowie Daten bezüglich der räumlichen Lage und Orientierung des Werkstücks in der Maschine (Einspann-Daten) in der numerischen Steuereinrichtung für jeden Zeitpunkt der Bearbeitung des Werkstücks vor. Ferner kennt die numerische Steuereinrichtung zu jedem Zeitpunkt der Bearbeitung auch die Orientierung des Werkzeugs (der Werkzeugachse). Aus diesen Daten kann die numerische Steuereinrichtung somit zu jedem Zeitpunkt der Bearbeitung den Neigungswinkel zwischen der Flächennormalen der Werkstückoberfläche und der Werkzeugachse bestimmen. In Verbindung mit einer vorgegebenen bzw. vorgebbaren Eintrittstiefe des Werkzeugs in das Werkstück liegen der numerischen Steuereinrichtung somit zu jedem Zeitpunkt die Daten vor, mittels der durch einfache geometrische Berechnungen sowohl der Schnittbereich des Werkstücks, also der Bereich des Werkstücks, in dem gerade ein Span abgehoben wird, als auch der Schnittbereich der Schneide, also der Bereich der Schneide der gerade Material von dem Werkstück abträgt, bestimmt werden können.

Ferner lässt sich aus den genannten Daten zu jedem Zeitpunkt der Bearbeitung der äußere Schnittpunkt der Schneide, also der Punkt der Schneide, der sich in Kontakt mit dem Werkstück befindet und der von allen in Kontakt mit dem Werkstück befindlichen Punkten der Schneide den größten Abstand zu der Werkzeugachse aufweist, bestimmen.

Ist der äußere Schnittpunkt der Schneide bekannt, liegt damit aufgrund der bekannten Geometriedaten des Werkzeugs auch der Schnittpunkt-Abstand als Abstand zwischen dem äußeren Schnittpunkt und der Werkzeugachse in der numerischen Steuereinrichtung vor.

Eine Ausführungsform der Erfindung sieht vor, dass die Spindeldrehzahl derart ermittelt wird, dass sich entlang der Bahn für den jeweiligen äußeren Schnittpunkt im Verlauf der Bearbeitung eine wenigstens im Wesentlichen konstante vorgegebene oder vorgebbare Schnittgeschwindigkeit ergibt.

Durch den Schnittpunkt-Abstand in Verbindung mit der Spindeldrehzahl liegt auch die Schnittgeschwindigkeit der Schneide in dem äußeren Berührpunkt fest.

Vorteilhaft sieht die Erfindung vor, dass die Spindeldrehzahl derart ermittelt (und eingestellt) wird, dass sich - zumindest in einem bestimmten Bereich des Werkstücks, der durch das Werkzeug bearbeitet wird - für den äußeren Schnittpunkt im Verlauf der Bearbeitung eine wenigstens im Wesentlichen konstante Schnittgeschwindigkeit ergibt.

Besonders vorteilhaft wird die Spindeldrehzahl so bestimmt und eingestellt, dass sich für die Bearbeitung in dem äußeren Schnittpunkt stets die - in der Regel seitens des Werkzeug-Herstellers vorgegebene - maximal für das Werkzeug zulässige Schnittgeschwindigkeit bzw. die Nenn- oder Sollschnittgeschwindigkeit für das Werkzeug ergibt.

Diese Ausführungsform bietet den Vorteil, dass die Spindeldrehzahl exakt für diesen äußeren Schnittpunkt und damit den Punkt mit der höchsten Schnittgeschwindigkeit aller in Kontakt mit dem Werkstück stehender Punkte der Schneide ermittelt und eingestellt wird. Die vorgegebene maximale Schnittgeschwindigkeit des Werkzeugs wird somit erreicht, aber an keinem Punkt der Schneide überschritten.

Es ist jedoch auch möglich, dass beispielsweise durch einen Bediener an der Maschine mittels entsprechender Einstellmöglichkeiten an der numerischen Steuereinrichtung eine andere, insbesondere kleinere, Schnittgeschwindigkeit als die maximal zulässige Schnittgeschwindigkeit vorgebbar ist.

Eine Ausführungsform der Erfindung sieht vor, dass eine Vorschubgeschwindigkeit, mit der sich während der Bearbeitung des Werkstücks das Werkzeug relativ zu dem Werkstück bewegt, in Abhängigkeit der Spindeldrehzahl ermittelt wird.

Ein wesentlicher Vorteil der erfindungsgemäßen Anpassung der Spindeldrehzahl liegt darin begründet, dass dadurch eine Vorschubgeschwindigkeit, mit der sich während der Bearbeitung des Werkstücks das Werkzeug relativ zu dem Werkstück bewegt, in Abhängigkeit der Spindeldrehzahl ermittelt und mittels der numerischen Steuereinrichtung eingestellt werden kann.

Daraus wird ersichtlich, dass durch eine Erhöhung der Spindeldrehzahl n auch eine Erhöhung der Vorschubgeschwindigkeit $v_f$ (feed) möglich ist. Daraus resultiert letztendlich einer der Hauptvorteile der Erfindung, nämlich eine insgesamt schnellere Bearbeitung des Werkstücks.

Wird die Spindeldrehzahl insbesondere derart eingestellt, dass als Schnittgeschwindigkeit für den äußeren Schnittpunkt die seitens des Herstellers des Werkzeugs vorgegebene, maximale Schnittgeschwindigkeit für das Werkzeug eingestellt wird, so können damit mit dem Werkzeug optimale Bearbeitungszeiten erreicht werden.

Eine Ausführungsform der Erfindung sieht vor, dass die Spindeldrehzahl und/oder der äußere Schnittpunkt-Abstand und/oder die Vorschubgeschwindigkeit (vorab) im Zuge einer Bahnplanung in einer aus Sicht der Bearbeitungsmaschine externen Recheneinrichtung, insbesondere einem CAD/CAM-System, bestimmt und anschließend während der Bewegung des Werkzeugs entlang der Bahn mittels einer mit der Bearbeitungsmaschine verbundenen numerischen Steuereinrichtung eingestellt werden.

Diese Ausführungsform bietet den Vorteil, dass die entsprechenden Berechnungen und Anpassungen hinsichtlich der Spindeldrehzahl und Vorschubgeschwindigkeit dann bereits vorab erfolgen und in einem entsprechenden Steuerprogramm für die numerische Steuereinrichtung, z.B. in einem Teileprogramm für eine CNC-Steuerung, festgelegt werden können. Die numerische Steuereinrichtung wird dadurch nicht durch zusätzliche Berechnungen belastet und die Berechnung der genannten Größen kann bereits erfolgen, bevor mit der Bearbeitung des Werkstücks mittels der Bearbeitungsmaschine begonnen wird.

Eine Ausführungsform der Erfindung sieht vor, dass die jeweilige Spindeldrehzahl und/oder der jeweilige äußere Schnittpunkt-Abstand und/oder die jeweilige Vorschubgeschwindigkeit einzelnen Bahnpunkten oder einzelnen Bahnabschnitten der Bahn zugeordnet werden.

Diese Ausführungsform bietet den Vorteil, dass die Spindeldrehzahl und/oder die Vorschubgeschwindigkeit durch bestimmte Anweisungen in dem Steuerprogramm, z.B. einem Teileprogramm für eine Werkzeugmaschine, festgelegt werden können, die sich dann auf einzelne oder eine bestimmte Anzahl an Programmanweisungen, insbesondere Sätze des Teileprogramms, auswirken.

Die Einstellungen können so für einzelne Programmanweisungen, z.B. G-Code-Befehle, oder eine Gruppe von Programmanweisungen bzw. eine Gruppe von G-Code-Befehlen eines Teileprogramms gelten.

Eine Ausführungsform der Erfindung sieht vor, dass die Spindeldrehzahl und/oder der äußere Schnittpunkt-Abstand und/oder die Vorschubgeschwindigkeit im Zuge der Bearbeitung des Werkstücks mittels einer mit der Bearbeitungsmaschine verbundenen numerischen Steuereinrichtung bestimmt und eingestellt werden.

Damit kann die Erfindung auch dann angewendet werden, wenn die genannten Änderungen nicht bereits vorab in einem entsprechenden Steuerprogramm (insbesondere Teileprogramm) für die numerische Steuereinrichtung festgelegt wurden.

Insbesondere können die genannten, optimalen Schnittbedingungen dann auch während der laufenden Bearbeitung des Werkstücks durch die numerische Steuereinrichtung ermittelt und eingestellt werden.

Die Vorteile der Erfindung kommen besonders dann zur Geltung, wenn es sich bei der Bearbeitung um eine Schlicht- oder Vorschlicht-bearbeitung - insbesondere von Freiformflächen - handelt, bei denen insbesondere eine geringe Eintrittstiefe des Werkzeugs gegenüber dem Durchmesser des Werkzeugs vorgegeben wird. Insbesondere in Bereichen der Werkstückoberfläche mit einer flachen Oberfläche, bei denen die Oberflächennormale also allenfalls geringfügig gegenüber der Werkzeugachse geneigt ist, können so bei vorgegebener Schnittgeschwindigkeit erheblich höhere Spindeldrehzahlen und damit höhere Vorschubgeschwindigkeit eingestellt werden.

Bei dem im Zusammenhang mit der Erfindung verwendeten Werkzeug handelt es sich vorzugsweise um einen Fräser, insbesondere einen Kugel-, einen Radius- oder einen Tonnenfräser.

Die Erfindung wird nachfolgend anhand von Ausführungsbeispielen näher erläutert. Dabei zeigen:

FIG 1    Ein Werkzeugmaschinensystem, umfassend eine Werkzeugmaschine und eine damit verbundene CNC-Steuerung;

FIG 2    die Bearbeitung einer Freiformfläche mit einem Kugelfräser;

FIG 3    einen Berührpunkt des Kugelfräsers mit der Werkstückoberfläche;

FIG 4    einen Schnittbereich der Werkstückoberfläche;

FIG 5    Verfahrensschritte bei der Durchführung eines erfindungsgemäßen Verfahrens.

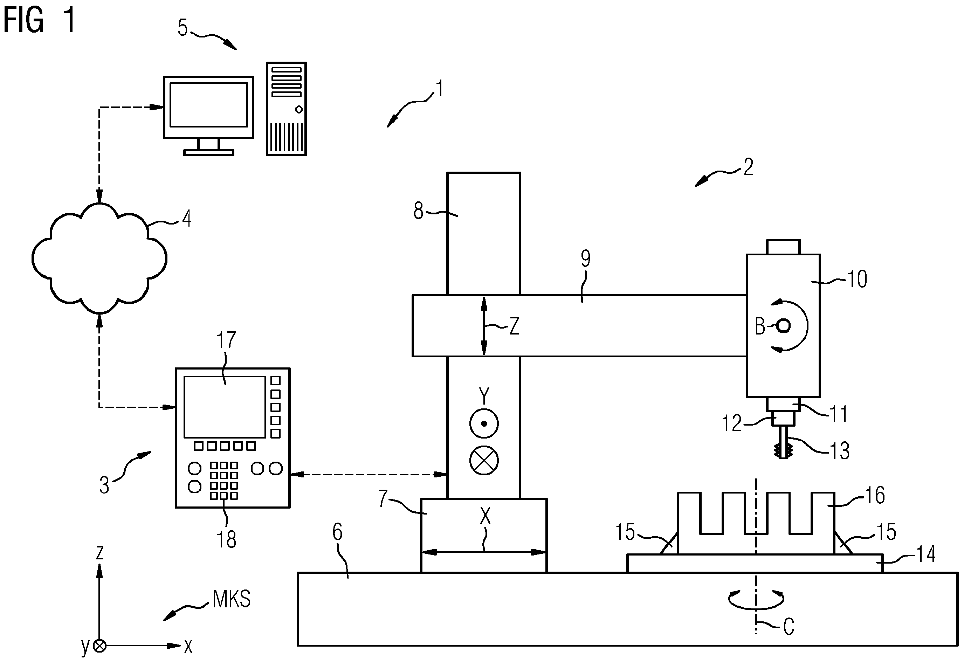

In FIG 1 ist schematisiert ein Bearbeitungsmaschinensystem in Form eines Werkzeugmaschinensystems 1 dargestellt. Das Werkzeugmaschinensystem 1 umfasst eine Bearbeitungsmaschine in Form einer Werkzeugmaschine 2. Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines CAD/CAM-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit dem ruhenden Maschinengestellt 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM-System 5 und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Bei der Abarbeitung des Teileprogramms erzeugt die CNC-Steuerung 3 in einem bestimmten Takt, dem Interpolationstakt, Lagesollwerte x, y und z für die Linearachsen sowie Winkellagesollwerte $\beta$ und $\gamma$ (nicht dargestellt) für die Rundachsen B und C. Durch diese Bewegungssollwerte wird das Werkzeug 13 mit vorgegebener Orientierung relativ zu dem Werkstück 16 entlang einer Bewegungsbahn (Bahn) bewegt.

Neben den reinen Lagesollwerten sind mittels der numerischen Steuereinrichtung auch die Dynamik der Relativbewegung bzw. der einzelnen Achsen betreffende Größen, insbesondere die Geschwindigkeit, die Beschleunigung oder der Ruck, ermittelbar bzw. einstellbar.

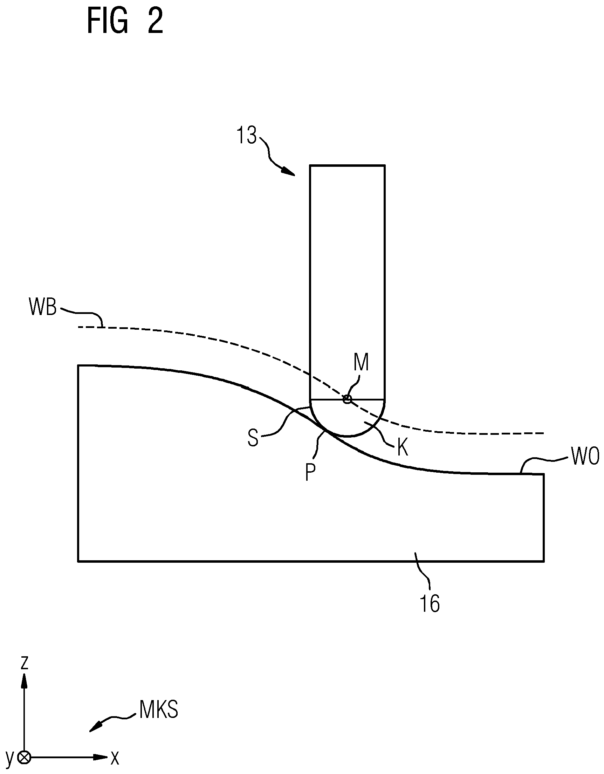

FIG 2 zeigt einen Kugelfräser 13 mit einem halbkugelförmigen Schneidkopf K, über den mehrere, z.B. 4 Schneiden bzw. Zähne (nicht dargestellt) gleichmäßig oder ungleichmäßig über den Umfang verteilt sind.

Zur Bearbeitung des Werkstücks 16 wird der Kugelfräser 13 entlang vorgegebener Bahnen, die bezüglich einem kartesischen Koordinatensystem MKS (Maschinenkoordinatensystem) mit den Achsen x, y und z definiert sind, derart über die Werkstückoberfläche WO geführt, dass mittels einer Schlichtbearbeitung mit relativ geringer Eintrittstiefe des Fräsers 13 in das Werkstück 16 eine glatte Werkstückoberfläche WO des Werkstücks 16 erzeugt wird. Die Bahnen des Werkzeugs können dabei parallel zu der x-z-Ebene verlaufen, entsprechend der exemplarisch dargestellten Bahn WB, aber auch in die Zeichenebene hinein (y-Richtung) oder aber entlang beliebiger 3-dimensionaler Kurven im Raum.

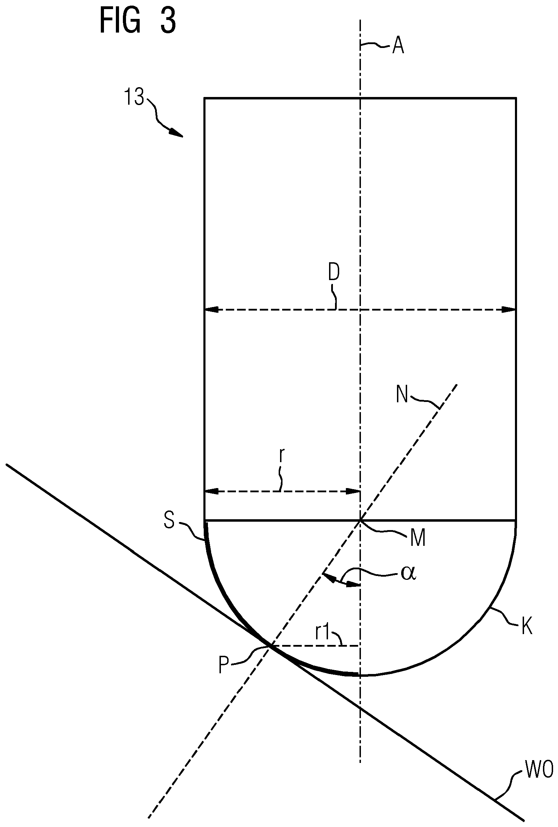

Da das Werkzeug 13 im Ausführungsbeispiel während der Bearbeitung des Werkstücks seine Orientierung (parallel zur z-Achse) beibehält, verschiebt sich der Berührpunkt P zwischen dem Schneidkopf K und der Werkstückoberfläche WO auf dem Schneidkopf K in Abhängigkeit der Orientierung der Werkstückoberfläche WO in dem Berührpunkt P. Die geometrischen Zusammenhänge sind nachfolgend in FIG 3 näher erläutert.

FIG 3 zeigt das vordere Ende des Kugelfräsers 13 mit dem halbkugelförmigen Schneidkopf K. Der Kugelfräser 13 hat einen Durchmesser D und der halbkugelförmige Schneidkopf K einen Radius r (D = 2 * r). Wie aus FIG 3 ersichtlich ist, berührt der Kugelfräser 13 die Werkstückoberfläche WO in einem Berührpunkt P. Eine Oberflächennormale N der Werkstückoberfläche WO in dem Berührpunkt P schneidet eine Werkzeugachse (Symmetrieachse) A des Kugelfräsers 13 in dem Schnittpunkt M (Kugelmittelpunkt) unter einem Winkel $\alpha$. Der Winkel $\alpha$ kann in der CNC-Steuerung leicht ermittelt werden, da der CNC-Steuerung sowohl die Richtung der Oberflächennormalen N in dem Berührpunkt P als auch die Orientierung der Werkzeugachse A vorliegen.

Aus dem Radius r und dem Winkel $\alpha$ lässt sich so der Radius $r_1$, also der Abstand des Berührpunktes P von der Werkzeugachse A ermitteln. Aus dem Radius $r_1$ und der Spindeldrehzahl n (der Rotationsgeschwindigkeit des Kugelfräsers 16) ergibt sich wiederum die Schnittgeschwindigkeit der Schneide S (bzw. der Schneiden) des Kugelfräsers 13 in dem Berührpunkt P.

Soll in dem Berührpunkt P eine bestimmte, für den Kugelfräser 13 vorgegebene Schnittgeschwindigkeit $v_c$ erreicht werden, so kann dies über eine entsprechende Anpassung der Spindeldrehzahl n erreicht werden.

Die Erfindung sieht eine entsprechende Anpassung der Spindeldrehzahl n an die Oberflächennormale N der Werkstückoberfläche WO des Werkstücks 16 in dem Berührpunkt P vor. Die Anpassung in der gezeigten Weise mag für Bearbeitungen mit einer sehr geringen Eintrittstiefe des Werkzeugs in das Werkstück ausreichend sein. Mit zunehmender Eintrittstiefe kommt es jedoch zu Abweichungen bezüglich der ermittelten Schnittgeschwindigkeit $v_c$, die eine andere Vorgehensweise erfordern, wie nachfolgen erläutert wird.

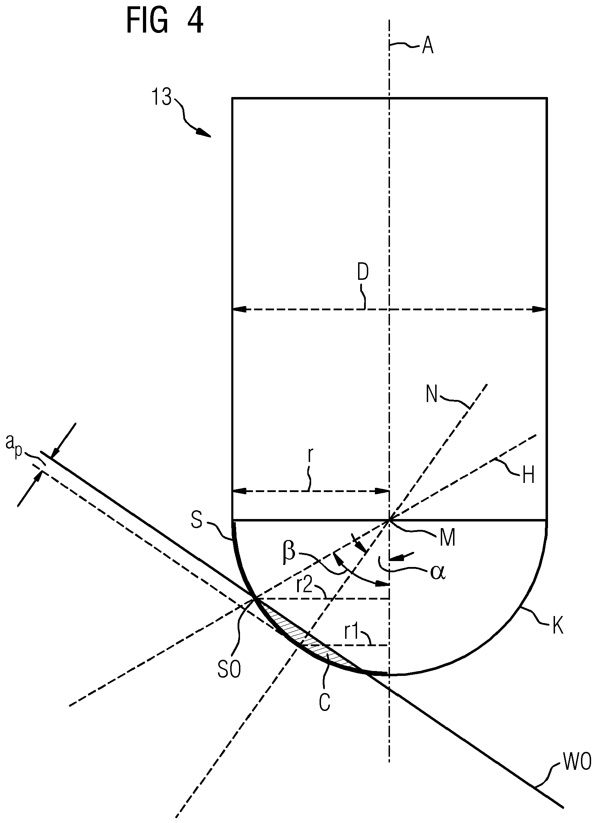

FIG 4 zeigt das vordere Ende des Kugelfräsers 13 mit dem halbkugelförmigen Schneidkopf K. Der Kugelfräser 13 hat einen Durchmesser D und der halbkugelförmige Schneidkopf K einen Radius r (D = 2 * r).

Wie in FIG 4 gezeigt ist, greift der Kugelfräser 13 mit einer (vorgegebenen) Eintrittstiefe $a_p$ in das Material des Werkstücks 16 ein. Insbesondere ergibt sich so ein Schnittbereich C (schraffiert dargestellt), in dem die Schneide S bzw. der Schneidkopf K des Kugelfräsers 13 in der gezeigten Situation in das Werkstück 16 eingreift und Späne abhebt.

Von den in der Regel mehreren Schneiden des Schneidkopfes K ist in der Figur wegen der besseren Übersichtlichkeit nur eine einzige, nämlich die Schneide S dargestellt. Bei vielen Werkzeugen liegt die Schneide bzw. liegen die Schneiden auch nicht wie in der FIG 4 gezeigt in einer Ebene, sondern sie ist bzw. sind verdrillt auf dem Schneidkopf ausgebildet. Die aufgezeigten Überlegungen können auf diese Ausführungsformen jedoch analog angewendet werden.

Der in der Figur dargestellte halbkugelförmige äußere Rand des Schneidkopfes K entspricht dem durch die rotierende Schneide (bzw. die rotierenden Schneiden) gebildeten Außenumfang.

Besonders relevant für die aktuelle Betrachtung ist der äußere Schnittpunkt SO, also der Punkt des in Eingriff befindlichen Schneidkopfes K bzw. der in Eingriff befindlichen Schneide S mit dem größten Abstand zu der Werkzeugachse A. In diesem Punkt SO tritt die größte Schnittgeschwindigkeit $v_c$ in der gezeigten Situation auf. Soll die Schnittgeschwindigkeit $v_c$ für den Kugelfräser 13 auf ein vorgegebenes Maximum beschränkt werden, so ist sie genau für diesen Punkt SO zu ermitteln und einzustellen. Die maximale Schnittgeschwindigkeit $v_{c,max}$ wird so an genau einem Punkt der Schneide S, nämlich dem Punkt SO, erreicht und an keinem in Eingriff befindlichen Punkt entlang der Schneide S überschritten.

Beispielsweise gelten für einen bestimmten Kugelfräser 13 mit einem Durchmesser D und einer vorgegebenen Schnittgeschwindigkeit $v_c$ folgende Zusammenhänge:

$$n = \frac{v_c * 1000}{D * \pi} = \frac{v_c * 1000}{2 * r * \pi}$$

$$v_f = f_Z * Z * n$$

Dabei sind:

n    die Spindeldrehzahl (in U/min)
$v_c$    die Schnittgeschwindigkeit (in m/min)
D    der Werkzeugdurchmesser (in mm)
$f_z$    der Zahnvorschub (in mm)
Z    die Anzahl der über den Umfang des Werkzeuges verteilten Zähne bzw. Schneiden (= Zähnezahl)
$v_f$    die Vorschubgeschwindigkeit (in mm/min)

Hinweis: die Angaben in Klammer nennen die übliche Einheit der jeweils genannten Größe. Es sind jedoch im konkreten Einzelfall auch Abweichungen von diesen üblicherweise verwendeten Einheiten möglich.

Für einen bestimmten Neigungswinkel und eine bestimmte Eintrittstiefe gelten weiter folgende Zusammenhänge:

$$r = a_p + r * \cos(\beta - \alpha)$$

$$\beta = \alpha + \arccos\left(1 - \frac{a_p}{r}\right)$$

Für den Abstand $r_2$ zwischen dem äußeren Schnittpunkt und der Werkzeugachse ergibt sich:

$$r_2 = r * \sin\beta$$

Für eine für den betreffenden Kugelfräser vorgegebene Schnittgeschwindigkeit $v_c$ ergibt sich damit eine Spindeldrehzahl:

$$n_2 = \frac{v_c * 1000}{2 * r_2 * \pi}$$

und damit

$$v_{f2} = f_z * Z * n_2 = f_z * Z * \frac{v_c * 1000}{2 * r_2 * \pi}$$

Dabei sind:

$a_p$     die Eintrittstiefe (in mm)

$\alpha$     der Neigungswinkel zwischen einer Flächennormalen N der Werkstückoberfläche WO im Schnittbereich des Werkstücks 16 und der Werkzeugachse A (in °)

$\beta$     der Winkel zwischen der Werkzeugachse A und einer Hilfslinie H, einer Geraden, die durch den Kugelmittelpunkt M des halbkugelförmigen Werkzeugkopfes K des Kugelfräsers und den äußeren Schnittpunkt SO verläuft (in °)

$r_2$     der Abstand des äußeren Schnittpunktes SO von der Werkzeugachse A (in mm)

$n_2$     die angepasste Spindeldrehzahl zum Erreichen der vorgegebenen Schnittgeschwindigkeit $v_c$ in dem äußeren Schnittpunkt SO (in U/min)

$v_{f2}$     die an die angepasste Spindeldrehzahl angepasste Vorschubgeschwindigkeit (in mm/min).

Dazu folgende Beispiele:
Für einen Kugelfräser 13 mit folgenden Werten

     D = 10 mm
     $v_c$ = 200 m/min
     $f_z$ = 0, 04 mm
     Z = 4

ergibt sich nach obigen Zusammenhängen bzw. Formeln für eine Freiform-Schlichtbearbeitung, bei der ohne eine erfindungsgemäße adaptive Drehzahlanpassung von dem "Worst-Case-Fall" von einem Neigungswinkel $\alpha$ zwischen der Werkstückoberfläche und der Werkzeugachse von 90° ausgegangen werden muss:

     n = 6366 U/min
     $f_z$ = 1018 mm

und bei einer erfindungsgemäßen, dynamischen Anpassung der Spindeldrehzahl und der Vorschubgeschwindigkeit für einen Neigungswinkel $\alpha$ von 45° und einer

Eintrittstiefe $a_p$ von 0,15 mm:

     n2 = 7420 U/min
     $v_{f2}$ = 1187 mm (entsprechend einer ca. 16% schnelleren Bearbeitung)

bzw. für einen Neigungswinkel $\alpha$ von 45° und einer Eintrittstiefe $a_p$ von 0,1 mm:

     n2 = 7633 U/min
     $v_{f2}$ = 1221 mm (entsprechend einer ca. 20% schnelleren Bearbeitung)

Durch die Erfindung wird es möglich, die Spindeldrehzahl n sowie die Vorschubgeschwindigkeit $v_f$ dynamisch während der Bearbeitung, d.h. entlang der Bahn zu ändern und an die aktuelle Situation anzupassen, derart, dass zumindest im Wesentlichen stets eine maximal mit dem betreffenden Werkzeug zulässige Schnittgeschwindigkeit $v_{c,max}$ und damit eine maximale Vorschubgeschwindigkeit $v_{f,max}$ ermittelt und eingestellt werden. Dadurch wird die Bearbeitungszeit reduziert bzw. optimiert.

Die Geometriedaten des Werkzeugs sind in der CNC-Steuerung bzw. dem CAD/CAM-System hinterlegt. Die erfindungsgemäße Anpassung der Spindeldrehzahl n ist daher auch auf andere Werkzeuggeometrien übertragbar und analog anwendbar. Insbesondere lassen sich die in den Ausführungsbeispielen für einen Kugelfräser gemachten Überlegungen analog auch auf andere Werkzeuge, insbesondere solche Werkzeuge mit einem sich in anderer als der gezeigten, kugelförmigen Verjüngung des Schneidkopfes in Richtung zu der Werkzeugspitze hin, übertragen, z.B. auf Radius- oder Tonnenfräser.

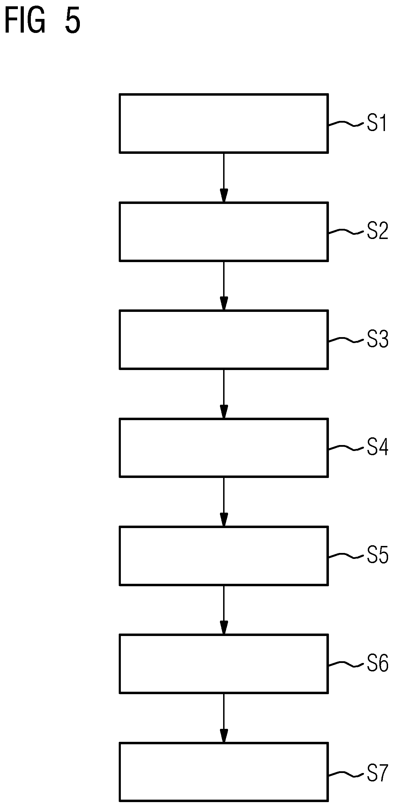

FIG 5 veranschaulicht im Zusammenhang mit der Erfindung wesentliche Verfahrensschritte.

In einem ersten Verfahrensschritt S1 wird ein Werkzeug in eine Werkzeugspindel einer von einer numerischen Steuereinrichtung gesteuerten Werkzeugmaschine eingespannt, wobei das Werkzeug wenigstens eine um eine Werkzeugachse des Werkzeugs rotierende Schneide aufweist und wobei das Werkzeug derart ausgestaltet ist, dass sich der Abstand zwischen der Schneide und der Werkzeugachse über den Verlauf der Schneide ändert, insbesondere zur Werkzeugspitze hin verkleinert, insbesondere kontinuierlich bzw. stetig verkleinert.

In einem weiteren Verfahrensschritt S2 wird das sich um die Werkzeugachse rotierende Werkzeug entlang einer vorgegebenen Bahn relativ zu dem Werkstück bewegt, derart, dass sich das Werkzeug zumindest abschnittsweise in Eingriff mit dem Werkstück befindet und Material von dem Werkstück abgetragen wird, wobei sich während der Bewegung des Werkzeugs relativ zu dem Werkstück die Orientierung einer Oberflächennormalen des Werkstücks relativ zu der Orientierung einer Werkzeugachse ändert. Die Werkstückoberfläche ist demnach an unterschiedlichen Stellen entlang der Bahn unterschiedlich gegenüber der Werkzeugachse geneigt.

In einem weiteren Verfahrensschritt S3 wird für bestimmte Punkte bzw. Bereiche der Werkstückoberfläche die Orientierung der Oberflächennormalen des Werkstücks relativ zu der Orientierung der Werkzeugachse, die die Werkzeugachse bei der Bearbeitung dieser Punkte bzw. Bereiche der Werkstückoberfläche einnimmt, also die Neigung der Werkstückoberfläche relativ zu der Werkzeugachse, bestimmt.

In einem weiteren Verfahrensschritt S4 wird eine Spindeldrehzahl n der Werkzeugspindel für den jeweiligen Punkt bzw. Bereich ermittelt, derart, dass während der Bearbeitung eine vorgegebene oder vorgebbare maximale Schnittgeschwindigkeit $v_{c,max}$ erreicht, aber an keinem Punkt der in Eingriff befindlichen Schneide des Werkzeugs überschritten wird.

In einem optionalen Verfahrensschritt S5 wird eine an die ermittelte Spindeldrehzahl n angepasste, maximale Vorschubgeschwindigkeit $v_{f,max}$ für das Werkzeug relativ zu dem Werkstück ermittelt.

In einem Verfahrensschritt S6 wird das Werkstück mit der für den jeweiligen Punkt bzw. Bereich der Werkstückoberfläche ermittelten Spindeldrehzahl n bearbeitet.

In einem optionalen Verfahrensschritt S7 wird das Werkstück mit der für den jeweiligen Punkt bzw. Bereich der Werkstückoberfläche ermittelten, maximalen Vorschubgeschwindigkeit $v_{f,max}$ bearbeitet.

**Patentansprüche**

1. Verfahren zum Bestimmen einer Spindeldrehzahl für eine spanabhebende Bearbeitung eines Werkstücks (16) mittels eines Werkzeugs (13),

   - wobei während der Bearbeitung des Werkstücks (16) das Werkzeug (13) mit einer um eine Werkzeugspindelachse rotierenden Werkzeugspindel (11) einer Bearbeitungsmaschine verbunden ist und mit der Spindeldrehzahl um eine Werkzeugachse (A) rotiert,
   - wobei das Werkzeug (13) zur spanabhebenden Bearbeitung des Werkstücks (16) wenigstens eine Schneide (S) aufweist,
   - wobei sich wenigstens in einem Bereich der Schneide (S) im Verlauf der Schneide (S) der Abstand zwischen der Schneide (S) und der Werkzeugachse (A) stetig ändert,
   - wobei sich das Werkzeug (13) während der Bearbeitung des Werkstücks (16) relativ zu dem Werkstück (16) entlang einer vorgegebenen Bahn (WB) bewegt,
   - wobei sich ein äußerer Schnittpunkt (SO) der in Eingriff mit dem Werkstück (16) befindlichen Schneide (S) dadurch auszeichnet, dass er von allen in Kontakt mit dem Werkstück (16) befindlichen Punkten des Bereichs der Schneide (S) den größten Abstand zu der Werkzeugachse (A) aufweist,
   - wobei sich entlang der Bahn (WB) eine Position des äußeren Schnittpunkts (SO) entlang der Schneide (S) ändert,
   - wobei die Spindeldrehzahl entlang der Bahn (WB) in Abhängigkeit der Position des äußeren Schnittpunkts (SO) in dem Bereich der Schneide (S) bestimmt wird.

2. Verfahren nach Anspruch 1, wobei ein äußerer Schnittpunkt-Abstand ($r_2$) als Abstand zwischen dem äußeren Schnittpunkt (SO) und der Werkzeugachse (A) bestimmt wird und die Spindeldrehzahl in Abhängigkeit des äußeren Schnittpunkt-Abstands ($r_2$) bestimmt wird.

3. Verfahren nach Anspruch 2, wobei eine Werkstückoberfläche (WO) des Werkstücks (16) bezüglich der Werkzeugachse (A) um einen Neigungswinkel ($\alpha$) geneigt ist,
   wobei der Neigungswinkel ($\alpha$) entlang der Bahn ermittelt wird und der äußere Schnittpunkt-Abstand ($r_2$) in Abhängigkeit des Neigungswinkels ($\alpha$) bestimmt wird.

4. Verfahren nach einem der vorherigen Ansprüche, wobei der äußere Schnittpunkt (SO) und/oder der äußere Schnittpunkt-Abstand ($r_2$) in Abhängigkeit von vorgegebenen oder vorbekannten Werkzeuggeometriedaten, Werkstückdaten und einer Eingriffstiefe ($a_p$) des Werkzeugs (13) in das Werkstück (16) bestimmt werden.

5. Verfahren nach einem der vorherigen Ansprüche, wobei die Spindeldrehzahl derart ermittelt wird, dass sich entlang der Bahn (WB) für den jeweiligen äußeren Schnittpunkt (SO) im Verlauf der Bearbeitung eine wenigstens im Wesentlichen konstante vorgegebene oder vorgebbare Schnittgeschwindigkeit ergibt.

6. Verfahren nach einem der vorherigen Ansprüche, wobei eine Vorschubgeschwindigkeit, mit der sich während der Bearbeitung des Werkstücks (16) das Werkzeug (13) relativ zu dem Werkstück (16) bewegt, in Abhängigkeit der Spindeldrehzahl ermittelt wird.

7. Verfahren nach einem der vorherigen Ansprüche, wobei die Spindeldrehzahl und/oder der äußere Schnittpunkt-Abstand ($r_2$) und/oder die Vorschubgeschwindigkeit im Zuge einer Bahnplanung in einer aus Sicht der Bearbeitungsmaschine externen Recheneinrichtung, insbesondere einem CAD/CAM-System (5), bestimmt und anschließend während der Bewegung des Werkzeugs (16) entlang der Bahn (WB) mittels einer mit der Bearbeitungsmaschine verbundenen numerischen Steuereinrichtung eingestellt werden.

8. Verfahren nach Anspruch 7, wobei die jeweilige Spindeldrehzahl und/oder der jeweilige äußere Schnittpunkt-Abstand ($r_2$) und/oder die jeweilige Vorschubgeschwindigkeit einzelnen Bahnpunkten oder einzelnen Bahnabschnitten der Bahn (WB) zugeordnet werden.

9. Verfahren nach einem der Ansprüche 1 bis 6, wobei die Spindeldrehzahl und/oder der äußere Schnittpunkt-Abstand ($r_2$) und/oder die Vorschubgeschwindigkeit im Zuge der Bearbeitung des Werkstücks (16) mittels einer mit der Bearbeitungsmaschine verbundenen numerischen Steuereinrichtung bestimmt und eingestellt werden.

10. Verfahren nach einem der Ansprüche 5 bis 9, wobei als Schnittgeschwindigkeit eine seitens eines Herstellers des Werkzeugs (16) vorgegebene, maximal zulässige Schnittgeschwindigkeit eingestellt wird.

11. Verfahren nach einem der vorherigen Ansprüche, wobei es sich bei der Bearbeitung um eine Schlicht- oder Vorschlicht-bearbeitung handelt.

12. Verfahren nach einem der vorherigen Ansprüche, wobei es sich bei dem Werkzeug (13) um einen Fräser, insbesondere einen Kugel-, Radius- oder Tonnenfräser, handelt.

13. Externe Recheneinrichtung, insbesondere CAD/CAM-System (5), zur Durchführung eines Verfahrens nach einem der Ansprüche 1 bis 7.

14. Numerische Steuereinrichtung, insbesondere CNC-Steuerung (3), zur Durchführung eines Verfahrens nach einem der Ansprüche 1 bis 12.

15. Bearbeitungsmaschinensystem, umfassend eine Bearbeitungsmaschine, insbesondere eine Werkzeugmaschine (2) oder einen Roboter, und eine damit verbundene numerische Steuereinrichtung nach Anspruch 14 zur Steuerung der Bearbeitungsmaschine.

FIG 1

# FIG 2

FIG 3

# FIG 4

FIG 5

Europäisches
Patentamt

European
Patent Office

Office européen
des brevets

# EUROPÄISCHER RECHERCHENBERICHT

**Nummer der Anmeldung**

**EP 22 16 1886**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CZ 31 068 U1 (CESKÉ VYSOKÉ UCENÍ TECHNICKÉ V PRAZE FAKULTA STROJNÍ ÚSTAV VÝROBNÍCH S) 3. Oktober 2017 (2017-10-03) * Zusammenfassung; Ansprüche 1-3; Abbildungen 1-6 * * Absatz [0016] – Absatz [0028] * * Absatz [0040] – Absatz [0049] * * Absatz [0006] * ----- | 1-15 | INV. G05B19/416 B23Q15/013 |
| A | WO 95/03565 A1 (OTSUKI TOSHIAKI [JP]; KOZAI HAHURIKO [JP]; OGINO HIDEO [JP]) 2. Februar 1995 (1995-02-02) * Zusammenfassung; Abbildungen 1-9 * * Absatz [0006] – Absatz [0013] * * Absatz [0084] – Absatz [0095] * ----- | 1-15 | |
| A | US 2017/308057 A1 (KREIDLER VOLKER [DE]) 26. Oktober 2017 (2017-10-26) * Zusammenfassung; Abbildungen 1-3b * * Absatz [0001] – Absatz [0008] * * Absatz [0041] * ----- | 1-15 | RECHERCHIERTE SACHGEBIETE (IPC) B23Q G05B |

Der vorliegende Recherchenbericht wurde für alle Patentansprüche erstellt

| Recherchenort | Abschlußdatum der Recherche | Prüfer |
|---|---|---|
| München | 26. August 2022 | Ohanovici, Z |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 16 1886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-08-2022

| Im Recherchenbericht angeführtes Patentdokument | Datum der Veröffentlichung | Mitglied(er) der Patentfamilie | Datum der Veröffentlichung |
|---|---|---|---|
| CZ 31068 U1 | 03-10-2017 | KEINE | |
| WO 9503565 A1 | 02-02-1995 | JP H0736514 A | 07-02-1995 |
| | | US 5563484 A | 08-10-1996 |
| | | WO 9503565 A1 | 02-02-1995 |
| US 2017308057 A1 | 26-10-2017 | CN 107111297 A | 29-08-2017 |
| | | DE 112015004920 T5 | 13-07-2017 |
| | | EP 3213160 A1 | 06-09-2017 |
| | | US 2017308057 A1 | 26-10-2017 |
| | | WO 2016065492 A1 | 06-05-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005005082 A2